# EUROPEAN PATENT SPECIFICATION

(11) **EP 4 524 423 B1**
(45) Date of publication and mention of the grant of the patent: **15.07.2026**
(21) Application number: 24199463.1
(22) Date of filing: 10.09.2024
(51) Int. Cl.: F16F 9/53

(54) **LOW-PRESSURE MAGNETORHEOLOGICAL DAMPER**
MAGNETORHEOLOGISCHER NIEDERDRUCKDÄMPFER
AMORTISSEUR MAGNÉTORHÉOLOGIQUE BASSE PRESSION

(30) Priority: 13.09.2023 CN 202311181816; 09.07.2024 US 202418767967
(43) Date of publication of application: 19.03.2025
(73) Proprietor: BeijingWest Industries Co. Ltd., 102400 Beijing (CN)
(72) Inventor: KNAPCZYK, Marcin, 31-261 Kraków, ul. Rusznikarska 14/120 (PL); WIDLA, Waldemar, 32-007 Zabierzów Bochenski 74 (PL)
(74) Representative: Lukaszyk, Szymon

(56) References cited:
- EP-A2- 1 245 856
- JP-A- 2009 058 081
- US-A1- 2008 067 019
- US-B2- 9 186 951

## Description

### Field of the Invention

The present invention generally relates to a suspension damper for a vehicle. More specifically, the present invention relates to a suspension damper that includes a magnetorheological (MR) fluid.

### Related Art

Damper assemblies are well known in the art for use in a vehicle. One such an MR damper is disclosed in Patent publication US5706920A which discloses a monotube MR damper including a main tube disposed on a center axis and extending between a first end and a second end. The damper defines a fluid compartment between the first end and the second end for containing a working fluid. A main piston is slidably disposed in the fluid compartment dividing the fluid compartment into a rebound compartment and a compression compartment. A piston rod is disposed on the center axis extending along the center axis to a distal end and attached to the main piston for moving the main piston between a compression stroke and a rebound stroke.

Magnetorheological (MR) dampers are increasingly used on vehicles to continuously control damping characteristics for proper ride and handling in all driving situations. Magnetorheological fluid generally consists of a clear carrier or base fluid (e.g. polyalphaolefin) with suspended particles. When the particles are charged with a magnetic field, they line up and change the viscosity of the fluid, which in turn can be used to control damping forces.

Document EP 1 245 856 A2 discloses a MR damper according to the pre-amble of claim 1.

### Summary of the invention

The present invention provides a magnetorheological (MR) damper. The MR damper comprises a main tube defining an MR chamber containing an MR fluid. The MR fluid has a viscosity that varies in response to application of a magnetic field. The MR damper also comprises: a piston rod disposed at least partially within the main tube; and an MR piston connected to the piston rod and dividing the MR chamber into an MR rebound chamber and an MR compression chamber. The MR piston includes an MR rebound valve configured to regulate a flow of the MR fluid from the MR rebound chamber into the MR compression chamber during a rebound stroke, thereby generating a rebound damping force. The MR damper also comprises a standard fluid chamber containing a standard fluid. The standard fluid has a viscosity that does not vary with application of a magnetic field. The MR damper also comprises a base valve assembly configured to regulate a flow of the standard fluid. The rebound damping force is generated substantially entirely by the MR rebound valve of the MR piston.

The present invention also provides a method for operating a magnetorheological (MR) damper. The method comprises: moving, by a piston rod, an MR piston through an MR chamber containing an MR fluid, the MR fluid having a viscosity that varies in response to application of a magnetic field, the MR piston dividing the MR chamber into an MR rebound chamber and an MR compression chamber; regulating, by a MR rebound valve of the MR piston, a flow of the MR fluid from the MR rebound chamber into the MR compression chamber during a rebound stroke, thereby generating a rebound damping force; and regulating, by a base valve assembly, a flow of a standard fluid having a viscosity that does not vary with application of a magnetic field. The rebound damping force is generated substantially entirely by the MR rebound valve of the MR piston.

### Brief description of the drawings

Other advantages of the present invention will be readily appreciated, as the same becomes better understood by reference to the following detailed description when considered in connection with the accompanying drawings wherein:
FIG. 1 shows a fragmentary view of a vehicle suspension including an MR damper in accordance with the present invention;
FIG. 2 shows a cross-sectional schematic view of a first MR damper according to an aspect of the present disclosure;
FIG. 3 shows a cross-sectional schematic view of a second MR damper according to an aspect of the present disclosure; and
FIG. 4 shows a flow chart illustrating steps in a method for operating an MR damper according to an aspect of the present disclosure.

### Description of the enabling embodiments

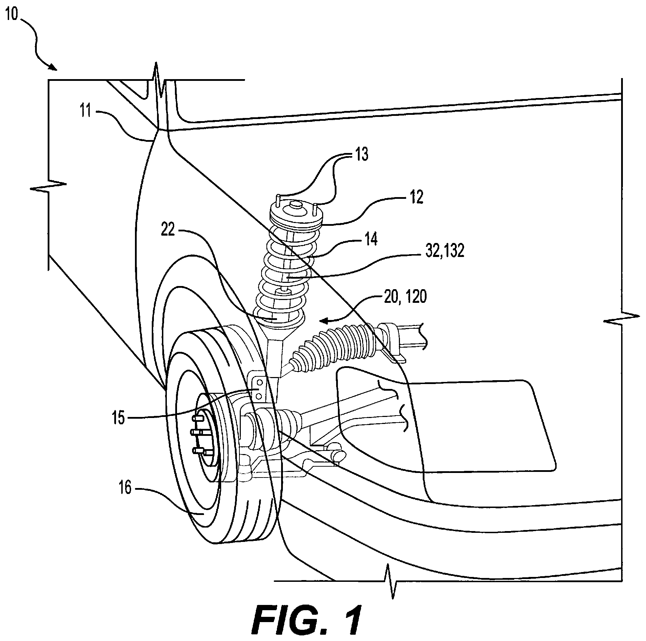

Referring to the Figures, wherein like numerals indicate corresponding parts throughout the several views, it is one aspect of the present invention to provide a magnetorheological (MR) damper 20, 120 for a vehicle 10. A generally illustrated in Figure 1, the MR damper 20, 120 is attached to a chassis 11 of the vehicle 10 by a top mount 12. A number of screws 13 extend through an upper surface of the top mount 12 to fasten the top mount 12 to a body of the vehicle 10. The top mount 12 is connected to a coil spring 14 and a piston rod 32, 132 of the MR damper 20, 120. The MR damper 20, 120 is also connected to a knuckle 15 supporting a wheel 16 of the vehicle 10.

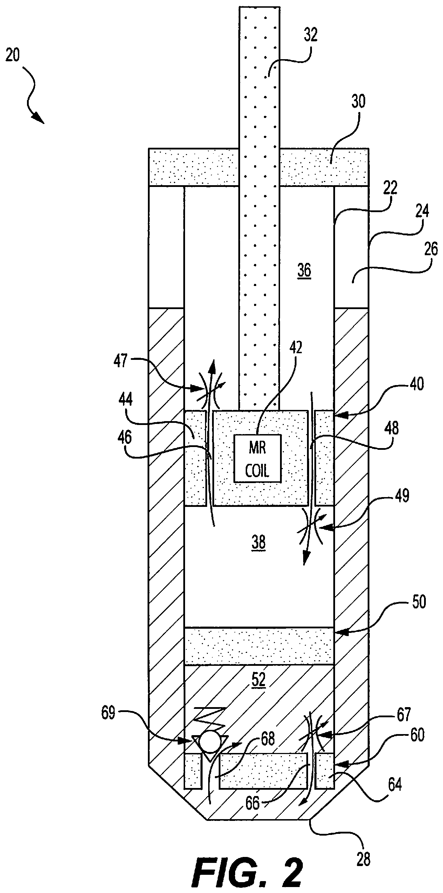

FIG. 2 generally shows a first MR damper 20 which may be used for the MR damper 20, 120 of the vehicle 10. The first MR damper 20 has a twin-tube configuration including an first main tube 22 and an outer tube 24 disposed coaxially around the first main tube 22 and defining a compensation chamber 26 annularly therebetween. The first MR damper 20 includes a closed end 28 and a first rod cap 30 opposite the closed end 28 and enclosing an end of each of the first main tube 22 and the outer tube 24. A first piston rod 32 is disposed at least partially within the first main tube 22. The first piston rod 32 extends through the first rod cap 30 and into the first main tube 22. The first main tube 22 defines a first MR chamber 36, 38 that contains an MR fluid. The MR fluid has a viscosity that varies in response to application of a magnetic field
A first MR piston 40 is disposed in the first main tube 22 and attached to an end of the first piston rod 32. The first MR piston 40 is slidable in an axial direction within the first main tube 22 and seals against an inner surface of the first main tube 22 to divide the first MR chamber 36, 38 into a first MR rebound chamber 36 and a first MR compression chamber 38. The first MR piston 40 includes a first MR coil 42 that is configured to generate a magnetic field for varying the viscosity of the MR fluid, and thereby dynamically adjusting the damping characteristics of the first MR damper 20 in either or both of a compression direction and/or a rebound direction. The first MR coil 42 may be connected to an electrical power source via wires that run through the first piston rod 32 (not shown in the FIGs).

The first MR piston 40 includes a first piston body 44 that defines a first MR compression fluid passage 46 providing a flow path for the MR fluid between the first MR compression chamber 38 and the first MR rebound chamber 36 during a compression stroke. The first MR piston 40 also includes a first MR compression valve 47 configured to regulate a flow of the MR fluid through the first MR compression fluid passage 46, from the first MR compression chamber 38 and into the first MR rebound chamber 36 during the compression stroke. The first MR compression valve 47 may also function as a check valve, blocking fluid from flowing through the first MR compression fluid passage 46 during the rebound stroke. The first MR compression valve 47 may include one or more variable orifices, which may include deflective discs to regulate the fluid flow.

The first piston body 44 of the first MR piston 40 also defines a first MR rebound fluid passage 48 providing a flow path for the MR fluid between the first MR compression chamber 38 and the first MR rebound chamber 36 during a rebound stroke. The first MR piston 40 also includes a first MR rebound valve 49 configured to regulate a flow of the MR fluid through the first MR rebound fluid passage 48, from the first MR rebound chamber 36 into the first MR compression chamber 38 during a rebound stroke. The first MR rebound valve 49 may also function as a check valve, blocking fluid from flowing through the first MR rebound fluid passage 48 during the compression stroke. The first MR rebound valve 49 may include one or more variable orifices, which may include deflective discs to regulate the fluid flow.

The first MR damper 20 also includes a first fluid separator 50 that separates the first MR compression chamber 38 from a first standard fluid chamber 52, which contains a standard (i.e. non-MR) fluid, such as an oil, and which has a viscosity that does not vary with application of a magnetic field. In some embodiments, and as shown in FIG. 2, the first fluid separator 50 may include a floating piston disposed in the first main tube 22 and which is slidable in an axial direction within the first main tube 22. The floating piston of the first fluid separator 50 seals against an inner surface of the first main tube 22 to separate the first MR compression chamber 38 from the first standard fluid chamber 52 and to prevent the MR fluid from contacting the standard fluid.

The first MR damper 20 also includes a first base valve assembly 60 disposed adjacent to the closed end 28 and configured to regulate a flow of the standard fluid between the first standard fluid chamber 52 and the compensation chamber 26, which may contain a combination of the standard fluid and a gas. The Gas may compress during the rebound stroke to take-up volume in the first MR damper 20 occupied by the first piston rod 32, as the first piston rod 32 enters through the first rod cap 30.

The first base valve assembly 60 includes a first valve body 64 that defines a first base compression fluid passage 66 providing a flow path for the standard fluid between the first standard fluid chamber 52 and the compensation chamber 26. The first base valve assembly 60 also includes a first base compression valve 67 configured to regulate flow of the standard fluid through the first base compression fluid passage 66, from the first standard fluid chamber 52 and into the compensation chamber 26 during the compression stroke. The first base compression valve 67 may also function as a check valve, blocking fluid from flowing through the first base compression fluid passage 66 in an opposite direction during the rebound stroke. The first base compression valve 67 may include one or more variable orifices, which may include deflective discs to regulate the fluid flow.

The first valve body 64 of the first base valve assembly 60 also defines a first base rebound fluid passage 68 providing a flow path for the standard fluid between the compensation chamber 26 and the first standard fluid chamber 52. The first base valve assembly 60 also includes a first base check valve 69 configured to allow fluid flow through the first base rebound fluid passage 68, from the compensation chamber 26 and into the first standard fluid chamber 52, while blocking fluid from flowing through the first base compression fluid passage 66 in an opposite direction. The first base check valve 69 is shown schematically on FIG. 2, and it may include various structures, such as a ball and seat and/or one or more deflective discs to provide the one-way flow regulating functionality. The first base check valve 69 may provide relatively little flow restriction in the rebound direction, therefore generating no significant damping force in the rebound direction.

The twintube design of the first MR damper 20 includes a low-pressure gas in the compensation chamber 26 to be used as volume compensation. It includes passive oil mixing with gas in the reservoir tube (no physical separation). Compression forces are generated by both the first MR piston 40 and by the first base valve assembly 60. Rebound forces are generated entirely, or substantially entirely by the first MR piston 40. The first base valve assembly 60, which may be called a passive base valve because it acts upon the standard fluid and not the MR fluid, may be used to define minimum compression forces (secondary ride). The first MR piston 40 may be used for all rebound damping (secondary + primary ride) and compression body damping (primary ride). The first MR piston 40 may have an asymmetrical force profile, generating less force in a compression direction than the rebound damping force in a rebound direction.

The combination of the first MR piston 40 with the first MR compression and rebound valves 47, 49, and the first base valve assembly 60 with the first base check valve 69 and the first base compression valve 67 causes the first MR damper 20 to generate compression forces by both the first MR piston 40 and the first base valve assembly 60, while rebound forces are generated substantially entirely by the first MR piston 40. This provides advantages over alternative damper designs, including better comfort and isolation, lower gas charge, wider tuning range in the compression stroke due to shorter response time and less temperature sensitivity.

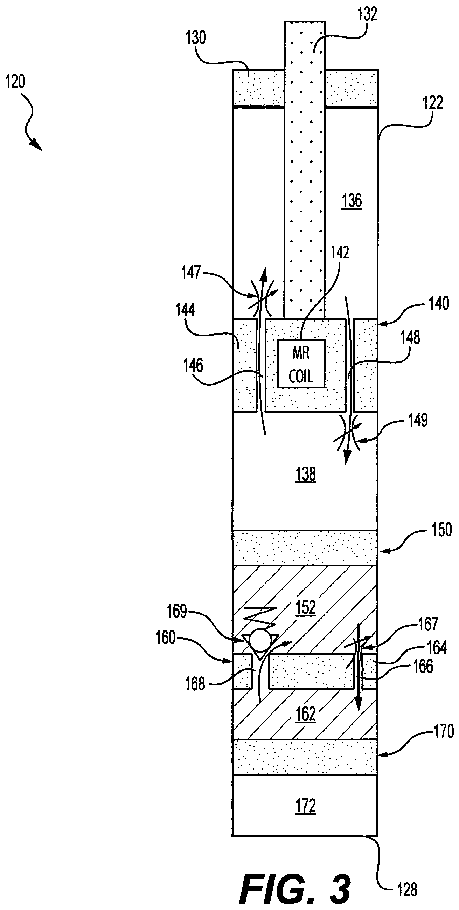

FIG. 3 generally shows a second MR damper 120 which may be used for the MR damper 20, 120 of the vehicle 10. The second MR damper 120 has a monotube configuration including a second main tube 122 with a closed end 128. The second MR damper 120 includes a second rod cap 130 that encloses an end of the second main tube 122 opposite the closed end 128.

A second piston rod 132 extends through the second rod cap 130 and into the second main tube 122. The second main tube 122 defines a second MR chamber 136, 138 that contains an MR fluid. The MR fluid has a viscosity that varies in response to application of a magnetic field.

A second MR piston 140 is disposed in the second main tube 122 and attached to an end of the second piston rod 132. The second MR piston 140 is slidable in an axial direction within the second main tube 122 and seals against an inner surface of the second main tube 122 to divide the second MR chamber 136, 138 into a second MR rebound chamber 136 and a second MR compression chamber 138. The second MR piston 140 includes a second MR coil 142 that is configured to generate a magnetic field for varying the viscosity of the MR fluid, and thereby dynamically adjusting the damping characteristics of the second MR damper 120 in either or both of a compression direction and/or a rebound direction. The second MR coil 142 may be connected to an electrical power source via wires that run through the second piston rod 132 (not shown in the FIGs).

The second MR piston 140 includes a second piston body 144 that defines a second MR compression fluid passage 146 providing a flow path for the MR fluid between the second MR compression chamber 138 and the second MR rebound chamber 136 during a compression stroke. The second MR piston 140 also includes a second MR compression valve 147 configured to regulate a flow of the MR fluid through the second MR compression fluid passage 146, from the second MR compression chamber 138 and into the second MR rebound chamber 136 during the compression stroke. The second MR compression valve 147 may also function as a check valve, blocking fluid from flowing through the second MR compression fluid passage 146 during the rebound stroke. The second MR compression valve 147 may include one or more variable orifices, which may include deflective discs to regulate the fluid flow.

The second piston body 144 of the second MR piston 140 also defines a second MR rebound fluid passage 148 providing a flow path for the MR fluid between the second MR compression chamber 138 and the second MR rebound chamber 136 during a rebound stroke. The second MR piston 140 also includes a second MR rebound valve 149 configured to regulate a flow of the MR fluid through the second MR rebound fluid passage 148, from the second MR rebound chamber 136 into the second MR compression chamber 138 during a rebound stroke. The second MR rebound valve 149 may also function as a check valve, blocking fluid from flowing through the second MR rebound fluid passage 148 during the compression stroke. The second MR rebound valve 149 may include one or more variable orifices, which may include deflective discs to regulate the fluid flow.

The second MR damper 120 also includes a second fluid separator 150 that separates the second MR compression chamber 138 from a second standard fluid chamber 152, 162, which contains a standard (i.e. non-MR) fluid, such as an oil, and which has a viscosity that does not vary with application of a magnetic field. In some embodiments, and as shown in FIG. 3, the second fluid separator 150 may include a floating piston disposed in the second main tube 122 and which is slidable in an axial direction within the second main tube 122. The floating piston of the second fluid separator 150 seals against an inner surface of the second main tube 122 to separate the second MR compression chamber 138 from the second standard fluid chamber 152, 162 and to prevent the MR fluid from contacting the standard fluid.

The second MR damper 120 also includes a second base valve assembly 160 disposed within the second standard fluid chamber 152, 162, dividing the second standard fluid chamber 152, 162 into an upper chamber 152 and a lower chamber 162. The second base valve assembly 160 is configured to regulate a flow of the standard fluid between the upper chamber 152 and the lower chamber 162 of the second standard fluid chamber 152, 162. In some embodiments, and as shown in FIG. 3, the second base valve assembly 160 may include a floating piston disposed in the second main tube 122 and which is slidable in an axial direction within the second main tube 122.

The second base valve assembly 160 includes a second valve body 164 that defines a second base compression fluid passage 166 providing a flow path for the standard fluid between the upper chamber 152 and the lower chamber 162. The second base valve assembly 160 also includes a second base compression valve 167 configured to regulate flow of the standard fluid through the second base compression fluid passage 166, from the upper chamber 152 and into the lower chamber 162 during the compression stroke. The second base compression valve 167 may also function as a check valve, blocking fluid from flowing through the second base compression fluid passage 166 in an opposite direction during the rebound stroke. The second base compression valve 167 may include one or more variable orifices, which may include deflective discs to regulate the fluid flow.

The second valve body 164 of the second base valve assembly 160 also defines a second base rebound fluid passage 168 providing a flow path for the standard fluid between the lower chamber 162 and the upper chamber 152. The second base valve assembly 160 also includes a second base check valve 169 configured to allow fluid flow through the second base rebound fluid passage 168, from the lower chamber 162 and into the upper chamber 152, while blocking fluid from flowing through the second base compression fluid passage 166 in an opposite direction. The second base check valve 169 is shown schematically on FIG. 3, and it may include various structures, such as a ball and seat and/or one or more deflective discs to provide the one-way flow regulating functionality. The second base check valve 169 may provide relatively little flow restriction in the rebound direction, therefore generating no significant damping force in the rebound direction.

The second MR damper 120 also includes a gas cup 170 disposed in the second main tube 122 and separating the lower chamber 162 of the second standard fluid chamber 152, 162 from a gas compartment 172 which contains a gas. The Gas may compress during the rebound stroke to take-up volume in the second MR damper 120 occupied by the second piston rod 132, as the second piston rod 132 enters through the second rod cap 130. In some embodiments, the gas cup 170 may be configured as floating piston that is slidable in an axial direction within the second main tube 122.

The monotube design of the second MR damper 120 includes a low-pressure gas in the gas compartment 172 to be used as volume compensation. Compression forces are generated by both the second MR piston 140 and by the second base valve assembly 160. Rebound forces are generated entirely, or substantially entirely by the second MR piston 140. The second base valve assembly 160, which may be called a passive base valve because it acts upon the standard fluid and not the MR fluid, may be used to define minimum compression forces (secondary ride). The second MR piston 140 may be used for all rebound damping (secondary + primary ride) and compression body damping (primary ride). The second MR piston 140 may have an asymmetrical force profile, generating less force in a compression direction than the rebound damping force in a rebound direction.

The combination of the second MR piston 140 with the second MR compression and rebound valves 147, 149, and the second base valve assembly 160 with the second base check valve 169 and the second base compression valve 167 causes the second MR damper 120 to generate compression forces by both the second MR piston 140 and the second base valve assembly 160, while rebound forces are generated substantially entirely by the second MR piston 140. This provides advantages over alternative damper designs, including better comfort and isolation, lower gas charge, wider tuning range in the compression stroke due to shorter response time and less temperature sensitivity.

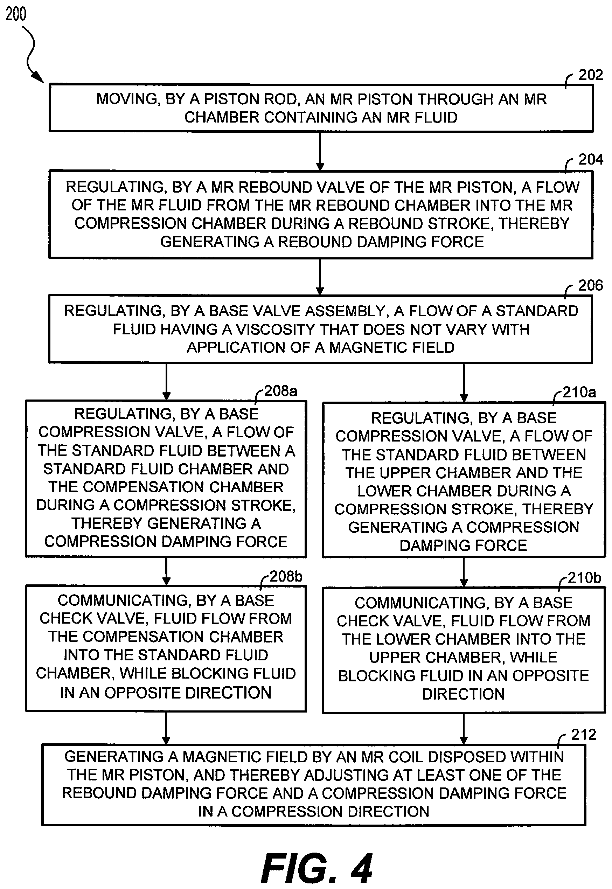

A method 200 for operating an MR damper is shown in the flow chart of FIG. 4. As can be appreciated in light of the disclosure, the order of operation within the method is not limited to the sequential execution as illustrated in FIG. 4, but may be performed in one or more varying orders as applicable and in accordance with the present disclosure.

The method 200 includes moving, by a piston rod, an MR piston through an MR chamber containing an MR fluid, at step 202.

The method 200 also includes regulating, by a MR rebound valve of the MR piston, a flow of the MR fluid from the MR rebound chamber into the MR compression chamber during a rebound stroke, thereby generating a rebound damping force, at step 204. The rebound damping force may be generated substantially entirely by the MR rebound valve of the MR piston.

The method 200 also includes regulating, by a base valve assembly, a flow of a standard fluid having a viscosity that does not vary with application of a magnetic field, at step 206.

In some embodiments, regulating the flow of the standard fluid at step 206 further includes: regulating, by a base compression valve of the base valve assembly, at step 208a, a flow of the standard fluid between a standard fluid chamber and the compensation chamber during a compression stroke, thereby generating a compression damping force; and communicating, by a base check valve, at step 208b, fluid flow from the compensation chamber into the standard fluid chamber, while blocking fluid in an opposite direction.

In some embodiments, the MR damper has a twin-tube configuration including an outer tube disposed coaxially around the main tube and defining a compensation chamber annularly between the main tube and the outer tube.

In some embodiments, the MR damper has a monotube configuration including the main tube defining a standard fluid chamber containing the standard fluid, and wherein the base valve assembly divides the standard fluid chamber into an upper chamber and a lower chamber.

In some embodiments, regulating the flow of the standard fluid at step 206 further includes: regulating, by a base compression valve of the base valve assembly, at step 210a, a flow of the standard fluid between the upper chamber and the lower chamber during a compression stroke, thereby generating a compression damping force; and communicating, by a base check valve, at step 210b, fluid flow from the lower chamber into the upper chamber, while blocking fluid in an opposite direction.

In some embodiments, the method 200 further includes generating, at step 212, a magnetic field by an MR coil disposed within the MR piston, and thereby adjusting at least one of the rebound damping force and a compression damping force in a compression direction.

In some embodiments, the MR coil is configured to adjust both of the rebound damping force and the compression damping force.

Obviously, many modifications and variations of the present invention are possible in light of the above teachings and may be practiced otherwise than as specifically described while within the scope of the appended claims.

## Claims

1. A magnetorheological (MR) damper (20, 120) comprising:
a main tube (22, 122) defining an MR chamber (36, 38, 136, 138) containing an MR fluid, the MR fluid having a viscosity that varies in response to application of a magnetic field;
a piston rod (32, 132) disposed at least partially within the main tube (22, 122); an MR piston (40, 140) connected to the piston rod (32, 132) and dividing the MR chamber (36, 38, 136, 138) into an MR rebound chamber (36, 136) and an MR compression chamber (38, 138), the MR piston (40, 140) including an MR rebound valve (49, 149) configured to regulate a flow of the MR fluid from the MR rebound chamber (36, 136) into the MR compression chamber (38, 138) during a rebound stroke, thereby generating a rebound damping force;
the magnetorheological (MR) damper **characterised by** further comprising:
a standard fluid chamber (52, 152, 162) containing a standard fluid, the standard fluid having a viscosity that does not vary with application of a magnetic field; and
a base valve assembly (60, 160) configured to regulate a flow of the standard fluid, and
wherein the rebound damping force is generated substantially entirely by the MR rebound valve (49, 149) of the MR piston (40, 140).

2. The MR damper (20, 120) of Claim 1, wherein the MR damper (20) has a twin-tube configuration including an outer tube (24) disposed coaxially around the main tube (22) and defining a compensation chamber (26) annularly between the main tube (22) and the outer tube (24).

3. The MR damper (20, 120) of Claim 2, wherein the base valve assembly (60) includes:
a base compression valve (67) configured to regulate flow of the standard fluid during a compression stroke, thereby generating a compression damping force; and
a base check valve (69) configured to allow fluid flow from the compensation chamber (26) into the standard fluid chamber (52), while blocking fluid in an opposite direction.

4. The MR damper (20, 120) of Claim 2 or 3, further comprising a fluid separator (50) disposed within the main tube (22) and separating the MR chamber (36, 38) from the standard fluid chamber (52) for isolating the MR fluid from the standard fluid, in particular wherein the fluid separator (50) includes a floating piston which is slidable in an axial direction within the main tube (22).

5. The MR damper of Claim 1, wherein the MR damper (120) has a monotube configuration including the main tube (122) defining the standard fluid chamber (152, 162), and wherein the base valve assembly (160) divides the standard fluid chamber (152, 162) into an upper chamber (152) and a lower chamber (162).

6. The MR damper (20, 120) of Claim 5, wherein the base valve assembly (160) includes:
a base compression valve (167) configured to regulate flow of the standard fluid between the upper chamber (152) and the lower chamber (162) during a compression stroke, thereby generating a compression damping force; and
a base check valve (169) configured to allow fluid flow from the lower chamber (162) into the upper chamber (152), while blocking fluid in an opposite direction.

7. The MR damper (20, 120) of Claim 5 or 6, further comprising a fluid separator (150) disposed within the main tube (122) and separating the MR chamber (136, 138) from the standard fluid chamber (152, 162) for isolating the MR fluid from the standard fluid, in particular wherein the fluid separator (150) includes a floating piston which is slidable in an axial direction within the main tube (122).

8. The MR damper (20, 120) of any one of Claims 5 to 7, further comprising a gas cup (170) disposed in the main tube (122) and separating the standard fluid chamber (152, 162) from a gas compartment (172) containing a gas, wherein the gas cup (170) is slidable in an axial direction within the main tube (122).

9. The MR damper (20, 120) of any one of Claims 1 to 8, wherein the MR piston (40, 140) has an asymmetrical force profile, generating less force in a compression direction than the rebound damping force in a rebound direction.

10. The MR damper (20, 120) of any one of Claims 1 to 9, further comprising an MR coil (42, 142) disposed within the MR piston (40, 140) and configured to generate a magnetic field, and to thereby adjust at least one of the rebound damping force and a compression damping force in a compression direction, in particular wherein the MR coil (42, 142) is configured to adjust both of the rebound damping force and the compression damping force.

11. A method for operating a magnetorheological (MR) damper, comprising:
moving, by a piston rod (32, 132), an MR piston (40, 140) through an MR chamber (36, 38, 136, 138) containing an MR fluid, the MR fluid having a viscosity that varies in response to application of a magnetic field, the MR piston (40, 140) dividing the MR chamber (36, 38, 136, 138) into an MR rebound chamber (36, 136) and an MR compression chamber (38, 138);
regulating, by a MR rebound valve (49, 149) of the MR piston (40, 140), a flow of the MR fluid from the MR rebound chamber (36, 136) into the MR compression chamber (38, 138) during a rebound stroke, thereby generating a rebound damping force; and
regulating, by a base valve assembly (60, 160), a flow of a standard fluid having a viscosity that does not vary with application of a magnetic field, and
wherein the rebound damping force is generated substantially entirely by the MR rebound valve (49, 149) of the MR piston (40, 140).

12. The method of Claim 11, wherein the MR damper (20) has a twin-tube configuration including an outer tube (24) disposed coaxially around the main tube (22) and defining a compensation chamber (26) annularly between the main tube (22) and the outer tube (24).

13. The method of Claim 12, wherein the regulating the flow of the standard fluid further includes:
regulating, by a base compression valve (67) of the base valve assembly (60), a flow of the standard fluid between a standard fluid chamber (52) and the compensation chamber (26) during a compression stroke, thereby generating a compression damping force; and
communicating, by a base check valve (69), fluid flow from the compensation chamber (26) into the standard fluid chamber (52), while blocking fluid in an opposite direction.

14. The method of Claim 11, wherein the MR damper (20, 120) has a monotube configuration including the main tube (122) defining a standard fluid chamber (152, 162) containing the standard fluid, and wherein the base valve assembly (160) divides the standard fluid chamber (152, 162) into an upper chamber (152) and a lower chamber (162),
in particular wherein the regulating the flow of the standard fluid further includes:
regulating, by a base compression valve (167), a flow of the standard fluid between the upper chamber (152) and the lower chamber (162) during a compression stroke, thereby generating a compression damping force; and
communicating, by a base check valve (169), fluid flow from the lower chamber (162) into the upper chamber (152), while blocking fluid in an opposite direction.

15. The method of any one of Claims 11 to 14, further comprising generating a magnetic field by an MR coil (42, 142) disposed within the MR piston (40, 140), and thereby adjusting at least one of the rebound damping force and a compression damping force in a compression direction, in particular wherein the MR coil (42, 142) is configured to adjust both of the rebound damping force and the compression damping force.

## Patentansprüche

1. Ein magnetorheologischer (MR-)Dämpfer (20, 120), bestehend aus:
einem Hauptrohr (22, 122), das eine MR-Kammer (36, 38, 136, 138) bildet, welche eine MR-Flüssigkeit enthält, wobei die MR-Flüssigkeit eine Viskosität aufweist, die sich in Abhängigkeit von der Anlegung eines Magnetfelds ändert;
einer Kolbenstange (32, 132), die zumindest teilweise innerhalb des Hauptrohrs (22, 122) angeordnet ist;
einem MR-Kolben (40, 140), der mit der Kolbenstange (32, 132) verbunden ist und die MR-Kammer (36, 38, 136, 138) in eine MR-Rückprallkammer (36, 136) und eine MR-Kompressionskammer (38, 138) unterteilt, wobei der MR-Kolben (40, 140) ein MR-Rückprallventil (49, 149) umfasst, das so konfiguriert ist, dass es während eines Rückprallhubs einen Durchfluss der MR-Flüssigkeit aus der MR-Rückprallkammer (36, 136) in die MR-Kompressionskammer (38, 138) reguliert und dadurch eine Rückpralldämpfungskraft erzeugt;
der magnetorheologische (MR-)Dämpfer, der **dadurch gekennzeichnet ist, dass** er ferner umfasst:
eine Standardflüssigkeitskammer (52, 152, 162), die eine Standardflüssigkeit enthält, wobei die Standardflüssigkeit eine Viskosität aufweist, die sich bei Anlegen eines Magnetfelds nicht ändert; und
eine Basisventilbaugruppe (60, 160), die dazu ausgelegt ist, einen Durchfluss der Standardflüssigkeit zu regulieren, und
wobei die Rückpralldämpfungskraft im Wesentlichen vollständig durch das MR-Rückprallventil (49, 149) des MR-Kolbens (40, 140) erzeugt wird.

2. Der MR-Dämpfer (20, 120) nach Anspruch 1, wobei der MR-Dämpfer (20) einen Doppelrohr-Aufbau aufweist, der ein Außenrohr (24) umfasst, das koaxial um das Hauptrohr (22) angeordnet ist und ringförmig zwischen dem Hauptrohr (22) und dem Außenrohr (24) eine Ausgleichskammer (26) bildet.

3. Der MR-Dämpfer (20, 120) nach Anspruch 2, wobei die Basisventilbaugruppe (60) Folgendes umfasst:
ein Basis-Kompressionsventil (67), das so ausgelegt ist, dass es den Durchfluss der Standardflüssigkeit während eines Kompressionshubs reguliert und dadurch eine Druckdämpfungskraft erzeugt; und
ein Basis-Rückschlagventil (69), das so ausgelegt ist, dass es den Durchfluss der Flüssigkeit aus der Ausgleichskammer (26) in die Standardflüssigkeitskammer (52) ermöglicht, während es den Durchfluss in umgekehrter Richtung verhindert.

4. Der MR-Dämpfer (20, 120) nach Anspruch 2 oder 3, der ferner einen Flüssigkeitsseparator (50) umfasst, der innerhalb des Hauptrohrs (22) angeordnet ist und die MR-Kammer (36, 38) von der Standardflüssigkeitskammer (52) trennt, um die MR-Flüssigkeit von der Standardflüssigkeit zu isolieren, wobei insbesondere der Flüssigkeitsseparator (50) einen Schwimmkolben umfasst, der in axialer Richtung innerhalb des Hauptrohrs (22) verschiebbar ist.

5. Der MR-Dämpfer nach Anspruch 1, wobei der MR-Dämpfer (120) eine Einrohrkonfiguration aufweist, die das Hauptrohr (122) umfasst, welches die Standardflüssigkeitskammer (152, 162) definiert, und wobei die Basisventilbaugruppe (160) die Standardflüssigkeitskammer (152, 162) in eine obere Kammer (152) und eine untere Kammer (162).

6. Der MR-Dämpfer (20, 120) nach Anspruch 5, wobei die Basisventilbaugruppe (160) Folgendes umfasst:
ein Basis-Kompressionsventil (167), das so ausgelegt ist, dass es den Durchfluss der Standardflüssigkeit zwischen der oberen Kammer (152) und der unteren Kammer (162) während eines Kompressionshubs reguliert und dadurch eine Druckdämpfungskraft erzeugt; und
ein Basis-Rückschlagventil (169), das so ausgelegt ist, dass es den Durchfluss der Flüssigkeit aus der unteren Kammer (162) in die obere Kammer (152) ermöglicht, während es den Durchfluss in umgekehrter Richtung verhindert.

7. Der MR-Dämpfer (20, 120) nach Anspruch 5 oder 6, der ferner einen Flüssigkeitsseparator (150) umfasst, der innerhalb des Hauptrohrs (122) angeordnet ist und die MR-Kammer (136, 138) von der Standardflüssigkeitskammer (152, 162) trennt, um die MR-Flüssigkeit von der Standardflüssigkeit zu isolieren, wobei insbesondere der Flüssigkeitsseparator (150) einen Schwimmkolben umfasst, der in axialer Richtung innerhalb des Hauptrohrs (122) verschiebbar ist.

8. Der MR-Dämpfer (20, 120) nach einem der Ansprüche 5 bis 7, der ferner einen Gasbehälter (170) umfasst, der im Hauptrohr (122) angeordnet ist und die Standardflüssigkeitskammer (152, 162) von einem Gasraum (172) trennt, der ein Gas enthält, wobei der Gasbehälter (170) in axialer Richtung innerhalb des Hauptrohrs (122) verschiebbar ist.

9. Der MR-Dämpfer (20, 120) nach einem der Ansprüche 1 bis 8, wobei der MR-Kolben (40, 140) ein asymmetrisches Kraftprofil aufweist, das in Druckrichtung eine geringere Kraft erzeugt als die Rückpralldämpfungskraft in Rückprallrichtung.

10. Der MR-Dämpfer (20, 120) nach einem der Ansprüche 1 bis 9, der ferner eine MR-Spule (42, 142) umfasst, die innerhalb des MR-Kolbens (40, 140) angeordnet ist und so ausgebildet ist, dass sie ein Magnetfeld erzeugt und dadurch zumindest entweder die Rückpralldämpfungskraft oder die Druckdämpfungskraft in einer Druckrichtung einstellt, wobei insbesondere die MR-Spule (42, 142) so ausgebildet ist, dass sie sowohl die Rückpralldämpfungskraft als auch die Druckdämpfungskraft einstellt.

11. Ein Verfahren zum Betreiben eines magnetorheologischen (MR-)Dämpfers, umfassend:
Bewegung eines MR-Kolbens (40, 140) durch eine Kolbenstange (32, 132) in einer MR-Kammer (36, 38, 136, 138), die eine MR-Flüssigkeit enthält, wobei die MR-Flüssigkeit eine Viskosität aufweist, die sich in Reaktion auf die Anlegung eines Magnetfelds ändert, wobei der MR-Kolben (40, 140) die MR-Kammer (36, 38, 136, 138) in eine MR-Rückprallkammer (36, 136) und eine MR-Kompressionskammer (38, 138) unterteilt;
Regeln eines Flusses der MR-Flüssigkeit aus der MR-Rückprallkammer (36, 136) in die MR-Kompressionskammer (38, 138) während eines Rückprallhubs mittels eines MR-Rückprallventils (49, 149) des MR-Kolbens (40, 140), wodurch eine Rückpralldämpfungskraft erzeugt wird; und
Regeln eines Flusses einer Standardflüssigkeit, deren Viskosität sich bei Anlegen eines Magnetfeldes nicht ändert, mittels einer Basisventilbaugruppe (60, 160), und
wobei die Rückpralldämpfungskraft im Wesentlichen vollständig durch das MR-Rückprallventil (49, 149) des MR-Kolbens (40, 140) erzeugt wird.

12. Das Verfahren nach Anspruch 11, wobei der MR-Dämpfer (20) eine Doppelrohrkonfiguration aufweist, die ein Außenrohr (24) umfasst, das koaxial um das Hauptrohr (22) angeordnet ist und ringförmig zwischen dem Hauptrohr (22) und dem Außenrohr (24) eine Ausgleichskammer (26) bildet.

13. Das Verfahren nach Anspruch 12, wobei die Regelung des Durchflusses der Standardflüssigkeit ferner umfasst:
das Regeln eines Flusses des Standardflüssigkeit zwischen einer Standardflüssigkeitskammer (52) und der Ausgleichskammer (26) während eines Kompressionshubs mittels eines Basis-Kompressionsventils (67) der Basisventilbaugruppe (60), wodurch eine Druckdämpfungskraft erzeugt wird; und
das Leiten eines Flüssigkeitsstroms aus der Ausgleichskammer (26) in die Standardflüssigkeitskammer (52) mittels eines Basis-Rückschlagventils (69), während ein Flüssigkeitsstrom in entgegengesetzter Richtung blockiert wird.

14. Das Verfahren nach Anspruch 11, wobei der MR-Dämpfer (20, 120) eine Einrohrkonfiguration aufweist, die das Hauptrohr (122), das eine Standardflüssigkeitskammer (152, 162) definiert, die die Standardflüssigkeit enthält, und wobei die Basisventilbaugruppe (160) die Standardflüssigkeitskammer (152, 162) in eine obere Kammer (152) und eine untere Kammer (162) unterteilt,
insbesondere wobei die Regelung des Durchflusses der Standardflüssigkeit ferner umfasst:
das Regeln eines Durchflusses der Standardflüssigkeit zwischen der oberen Kammer (152) und der unteren Kammer (162) während eines Kompressionshubs mittels eines Basis-Kompressionsventils (167), wodurch eine Druckdämpfungskraft erzeugt wird; und
das Leiten eines Flüssigkeitsstroms von der unteren Kammer (162) in die obere Kammer (152) mittels eines Basis-Rückschlagventils (169), während Flüssigkeit in entgegengesetzter Richtung blockiert wird.

15. Das Verfahren nach einem der Ansprüche 11 bis 14, das ferner das Erzeugen eines Magnetfelds durch eine MR-Spule (42, 142) umfasst, die innerhalb des MR-Kolbens (40, 140) angeordnet ist, und dadurch Einstellen mindestens einer der Rückpralldämpfungskraft und einer Druckdämpfungskraft in einer Druckrichtung, wobei insbesondere die MR-Spule (42, 142) so konfiguriert ist, dass sie sowohl die Rückpralldämpfungskraft als auch die Druckdämpfungskraft einstellt.

## Revendications

1. Un amortisseur magnétorhéologique (MR) (20, 120), comprenant:
un tube principal (22, 122) définissant une chambre MR (36, 38, 136, 138) contenant un fluide MR, le fluide MR ayant une viscosité qui varie en réponse à l'application d'un champ magnétique;
une tige de piston (32, 132) disposée au moins partiellement à l'intérieur du tube principal (22, 122);
un piston MR (40, 140) relié à la tige de piston (32, 132) et divisant la chambre MR (36, 38, 136, 138) en une chambre de détente MR (36, 136) et une chambre de compression MR (38, 138), le piston MR (40, 140) comprenant une soupape de détente MR (49, 149) configurée pour réguler un écoulement du fluide MR depuis la chambre de détente MR (36, 136) vers la chambre de compression MR (38, 138) pendant une course de détente, générant ainsi une force d'amortissement en détente;
l'amortisseur magnétorhéologique (MR) étant **caractérisé en ce qu'**il comprend en outre:
une chambre de fluide standard (52, 152, 162) contenant un fluide standard, le fluide standard ayant une viscosité qui ne varie pas avec l'application d'un champ magnétique; et
un ensemble soupape de base (60, 160) configuré pour réguler un écoulement du fluide standard, et
dans lequel la force d'amortissement en détente est générée substantiellement entièrement par la soupape de détente MR (49, 149) du piston MR (40, 140).

2. L'amortisseur MR (20, 120) selon la revendication 1, dans lequel l'amortisseur MR (20) présente une configuration bitube comprenant un tube externe (24) disposé de manière coaxiale autour du tube principal (22) et définissant une chambre de compensation (26) de manière annulaire entre le tube principal (22) et le tube externe (24).

3. L'amortisseur MR (20, 120) selon la revendication 2, dans lequel l'ensemble soupape de base (60) comprend:
une soupape de compression de base (67) configurée pour réguler un écoulement du fluide standard pendant une course de compression, générant ainsi une force d'amortissement en compression; et
un clapet antiretour de base (69) configuré pour permettre un écoulement de fluide depuis la chambre de compensation (26) vers la chambre de fluide standard (52), tout en bloquant le fluide dans une direction opposée.

4. L'amortisseur MR (20, 120) selon la revendication 2 ou 3, comprenant en outre un séparateur de fluides (50) disposé à l'intérieur du tube principal (22) et séparant la chambre MR (36, 38) de la chambre de fluide standard (52) afin d'isoler le fluide MR du fluide standard, en particulier le séparateur de fluides (50) comprenant un piston flottant coulissant dans une direction axiale à l'intérieur du tube principal (22).

5. L'amortisseur MR selon la revendication 1, dans lequel l'amortisseur MR (120) présente une configuration monotube comprenant le tube principal (122) définissant la chambre de fluide standard (152, 162), et dans lequel l'ensemble soupape de base (160) divise la chambre de fluide standard (152, 162) en une chambre supérieure (152) et une chambre inférieure (162).

6. L'amortisseur MR (20, 120) selon la revendication 5, dans lequel l'ensemble soupape de base (160) comprend:
une soupape de compression de base (167) configurée pour réguler un écoulement du fluide standard entre la chambre supérieure (152) et la chambre inférieure (162) pendant une course de compression, générant ainsi une force d'amortissement en compression; et
un clapet antiretour de base (169) configuré pour permettre un écoulement de fluide depuis la chambre inférieure (162) vers la chambre supérieure (152), tout en bloquant le fluide dans une direction opposée.

7. L'amortisseur MR (20, 120) selon la revendication 5 ou 6, comprenant en outre un séparateur de fluides (150) disposé à l'intérieur du tube principal (122) et séparant la chambre MR (136, 138) de la chambre de fluide standard (152, 162) afin d'isoler le fluide MR du fluide standard, en particulier le séparateur de fluides (150) comprenant un piston flottant coulissant dans une direction axiale à l'intérieur du tube principal (122).

8. L'amortisseur MR (20, 120) selon l'une quelconque des revendications 5 à 7, comprenant en outre une coupelle à gaz (170) disposée dans le tube principal (122) et séparant la chambre de fluide standard (152, 162) d'un compartiment à gaz (172) contenant un gaz, la coupelle à gaz (170) étant coulissante dans une direction axiale à l'intérieur du tube principal (122).

9. L'amortisseur MR (20, 120) selon l'une quelconque des revendications 1 à 8, dans lequel le piston MR (40, 140) présente un profil de force asymétrique, générant une force plus faible dans une direction de compression que la force d'amortissement en détente dans une direction de détente.

10. L'amortisseur MR (20, 120) selon l'une quelconque des revendications 1 à 9, comprenant en outre une bobine MR (42, 142) disposée à l'intérieur du piston MR (40, 140) et configurée pour générer un champ magnétique et ainsi ajuster au moins l'une parmi la force d'amortissement en détente et une force d'amortissement en compression dans une direction de compression, en particulier la bobine MR (42, 142) étant configurée pour ajuster à la fois la force d'amortissement en détente et la force d'amortissement en compression.

11. Un procédé de fonctionnement d'un amortisseur magnétorhéologique (MR), comprenant:
le déplacement, par une tige de piston (32, 132), d'un piston MR (40, 140) à travers une chambre MR (36, 38, 136, 138) contenant un fluide MR, le fluide MR ayant une viscosité qui varie en réponse à l'application d'un champ magnétique, le piston MR (40, 140) divisant la chambre MR (36, 38, 136, 138) en une chambre de détente MR (36, 136) et une chambre de compression MR (38, 138);
la régulation, par une soupape de détente MR (49, 149) du piston MR (40, 140), d'un écoulement du fluide MR depuis la chambre de détente MR (36, 136) vers la chambre de compression MR (38, 138) pendant une course de détente, générant ainsi une force d'amortissement en détente; et
la régulation, par un ensemble soupape de base (60, 160), d'un écoulement d'un fluide standard ayant une viscosité qui ne varie pas avec l'application d'un champ magnétique,
la force d'amortissement en détente étant générée substantiellement entièrement par la soupape de détente MR (49, 149) du piston MR (40, 140).

12. Le procédé selon la revendication 11, dans lequel l'amortisseur MR (20) présente une configuration bitube comprenant un tube externe (24) disposé de manière coaxiale autour du tube principal (22) et définissant une chambre de compensation (26) de manière annulaire entre le tube principal (22) et le tube externe (24).

13. Le procédé selon la revendication 12, dans lequel la régulation de l'écoulement du fluide standard comprend en outre:
la régulation, par une soupape de compression de base (67) de l'ensemble soupape de base (60), d'un écoulement du fluide standard entre une chambre de fluide standard (52) et la chambre de compensation (26) pendant une course de compression, générant ainsi une force d'amortissement en compression; et
l'autorisation, par un clapet antiretour de base (69), d'un écoulement de fluide depuis la chambre de compensation (26) vers la chambre de fluide standard (52), tout en bloquant le fluide dans une direction opposée.

14. Le procédé selon la revendication 11, dans lequel l'amortisseur MR (20, 120) présente une configuration monotube comprenant le tube principal (122) définissant une chambre de fluide standard (152, 162) contenant le fluide standard, et dans lequel l'ensemble soupape de base (160) divise la chambre de fluide standard (152, 162) en une chambre supérieure (152) et une chambre inférieure (162),
en particulier la régulation de l'écoulement du fluide standard comprenant en outre:
la régulation, par une soupape de compression de base (167) d'un écoulement du fluide standard entre la chambre supérieure (152) et la chambre inférieure (162) pendant une course de compression, générant ainsi une force d'amortissement en compression; et
l'autorisation, par un clapet antiretour de base (169) configuré pour permettre un écoulement de fluide depuis la chambre inférieure (162) vers la chambre supérieure (152), tout en bloquant le fluide dans une direction opposée.

15. Le procédé selon l'une quelconque des revendications 11 à 14, comprenant en outre la génération d'un champ magnétique par une bobine MR (42, 142) disposée à l'intérieur du piston MR (40, 140), et, de ce fait, l'ajustement d'au moins l'une parmi la force d'amortissement en détente et une force d'amortissement en compression dans une direction de compression, en particulier la bobine MR (42, 142) étant configurée pour ajuster à la fois la force d'amortissement en détente et la force d'amortissement en compression.
